# FASCICULE DE BREVET EUROPEEN

(11) **EP 4 244 467 B1**
(45) Date de publication et mention de la délivrance du brevet: **01.01.2025**
(21) Numéro de dépôt: 21815247.8
(22) Date de dépôt: 05.11.2021
(51) Int. Cl.: F01D 15/10, F02C 6/20, F02C 7/06, F02C 7/32

(54) **TURBOMACHINE À PROPULSION HYBRIDE ET AÉRONEF COMPORTANT UNE TELLE TURBOMACHINE**
HYBRIDANTRIEBSTURBOMASCHINE UND FLUGZEUG MIT SOLCH EINER TURBOMASCHINE
HYBRID PROPULSION TURBOMACHINE AND AIRCRAFT COMPRISING SUCH A TURBOMACHINE

(30) Priorité: 16.11.2020 FR 2011720
(43) Date de publication de la demande: 20.09.2023
(73) Titulaire: Safran Helicopter Engines, 64510 Bordes (FR)
(72) Inventeur: KLONOWSKI, Thomas, 77550 MOISSY-CRAMAYEL (FR); APOSTIN, Lucie, Stéphanie, 77550 MOISSY-CRAMAYEL (FR)
(74) Mandataire: Brevalex
(86) Numéro de dépôt international: PCT/FR2021/051962
(87) Numéro de publication internationale: WO 2022/101570

(56) Documents cités:
- FR-A1- 3 057 029
- FR-A1- 3 061 241
- FR-A1- 3 073 569
- US-A1- 2011 030 385
- US-A1- 2017 321 601

## Description

### Domaine technique

L'invention concerne le domaine des turbomachines.

L'invention a plus précisément pour objet une turbomachine et un aéronef comportant une telle turbomachine.

### État de l'art antérieur

Il est connu du document US2017/321601 la possibilité d'équiper des aéronefs avec des turbomachines, telles que des turbopropulseurs, intégrant une machine électrique tournante. Une telle machine électrique permet à la fois d'offrir une fonction génération d'électricité, en mode génératrice, pour alimenter l'aéronef en électricité, et une fonction de propulsion dans le cadre de déplacements au sol de l'aéronef, notamment les déplacements de type taxiage.

Ainsi un turbopropulseur selon cette possibilité, comprend une hélice, un arbre porte-hélice portant l'hélice, la machine électrique tournante qui présente au moins une première configuration dans laquelle elle est couplée mécaniquement à l'arbre porte-hélice et permet d'entraîner en rotation l'arbre porte-hélice lorsqu'elle est alimentée en courant.

Néanmoins, la fonction propulsion électrique fournie par la machine électrique des turbopropulseurs proposés par le document US2017/321601 n'est pas satisfaisante. En effet, pour assurer le fonctionnement de certains équipements du turbopropulseur entraînés par la rotation de la turbine à gaz, il est nécessaire de maintenir en marche la turbine à gaz. Ainsi, les turbopropulseurs enseignés par le document US2017/321601 n'autorisent pas une réelle propulsion 100% électrique, la turbine à gaz devant être maintenue en fonctionnement même lorsque l'hélice est entraînée par la machine électrique tournante.

### Exposé de l'invention

L'invention vise à remédier à cet inconvénient et vise ainsi à fournir une turbomachine comprenant une machine électrique rotative qui présente une fonction propulsion électrique plus adaptée.

L'invention concerne à cet effet une turbomachine comprenant une hélice, un arbre porte-hélice portant l'hélice, une machine électrique tournante, présentant au moins une première configuration dans laquelle elle est couplée mécaniquement à l'arbre porte hélice, et une pompe à huile moteur alimentant un circuit de lubrification de la turbomachine, la machine électrique tournante étant apte à entraîner en rotation l'arbre porte hélice lorsqu'elle est alimentée en courant dans l'au moins une première configuration.

La machine électrique tournante dans la première configuration est couplée mécaniquement à la pompe à huile moteur de telle manière que la machine électrique tournante entraîne en outre la pompe à huile moteur lorsqu'elle est alimentée en courant.

De cette manière les fonctions de lubrification et les autres fonctions associées à la pompe à huile moteur sont conservées lorsque la machine électrique tournante est dans la première configuration et fournie une propulsion électrique de la turbomachine. De même, les autres fonctions annexes fournies par la force hydraulique du circuit d'huile, telles que la commande du pas d'hélice dans le cadre d'une hélice à pas variable, sont également fonctionnelles lors de la propulsion électrique dans le cadre d'une telle turbomachine. Ainsi, les fonctions de lubrification et ces fonctions annexes pouvant être fournies en l'absence de fonctionnement de la turbine à gaz, celle-ci n'a pas à être maintenue en marche contrairement aux turbomachines de l'art antérieur. De ce fait, la fonction de propulsion électrique permise par la machine électrique tournante selon l'invention est particulièrement adaptée.

On notera en particulier que si une telle propulsion électrique est particulièrement adaptée pour les déplacements de type taxiage, l'invention rend envisageable une telle propulsion électrique pour des déplacements plus exigeants tels que le vol de croisière.

La turbomachine peut être un turbopropulseur ou un turbomoteur du type à rotor basculant plus connu sous la dénomination anglaise « Proprotor ».

On notera que les termes « propulsion » par la machine électrique tournante, ou « propulsion électrique », doivent s'entendre par « entraînement » par la machine électrique tournante ou d'entraînement électrique, le terme de propulsion ayant été choisi par simplification puisque l'invention vise notamment les turbopropulseurs pour lesquels il s'agit effectivement de « propulsion » par la machine électrique tournante et de « propulsion électrique ».

La machine électrique tournante peut être couplée mécaniquement à la pompe à huile moteur au moyen d'au moins une première roue libre.

Avec une telle première roue libre, la pompe à huile moteur peut être entraînée aussi bien par la machine électrique tournante que par une turbine haute pression d'une turbine à gaz sans risque d'endommagement, puisque le mouvement de la pompe à huile moteur peut être décorélé de celui de la machine électrique tournante par la première roue libre.

La turbomachine peut comprendre en outre une turbine à gaz comprenant une turbine haute pression, la pompe à huile moteur étant couplée mécaniquement à la turbine haute pression au moyen d'une deuxième roue libre de manière à permettre un entraînement de la pompe à huile moteur aussi bien par la machine électrique tournante dans au moins sa première configuration que par la turbine haute pression.

Avec une telle deuxième roue libre, la pompe à huile moteur peut être entraînée par la machine électrique tournante sans mettre en rotation la turbine haute pression. De cette manière la charge appliquée à la machine tournante s'en trouve réduite et on réduit la puissance de la machine électrique tournante nécessaire pour mettre en rotation la pompe à huile moteur.

De plus, avec de telles première et deuxième roues libres, la pompe à huile moteur peut être entraînée aussi bien par la machine électrique tournante que par la turbine haute pression et ainsi assurer la bonne lubrification de la turbomachine quelle que soit la source de la propulsion.

L'hélice peut être une hélice à pas variable et peut être reliée au circuit lubrification par une unité de commande d'hélice de telle manière à permettre un réglage du pas d'hélice à partir d'une pression d'huile qui lui est appliquée par l'unité de commande d'hélice.

La turbomachine comprenant une telle hélice bénéficie particulièrement de l'invention puisque la pression d'huile fournie par la pompe à huile moteur permet de contrôler le pas de l'hélice même lorsque la turbine à gaz est éteinte et que la propulsion est fournie par la machine électrique tournante.

L'unité de commande d'hélice peut comprendre une pompe à huile supplémentaire pour élever la pression d'huile fournie par la pompe à huile moteur et dans laquelle la pompe à huile supplémentaire est couplée mécaniquement à l'arbre porte-hélice de telle manière que la rotation de l'arbre porte-hélice entraîne la pompe à huile supplémentaire.

De cette manière, la pompe à huile supplémentaire est entraînée par l'arbre porte-hélice que la propulsion soit électrique ou classique.

La turbomachine peut être une turbomachine à turbine libre, la turbomachine comprenant en outre ainsi une turbine à gaz comprenant une turbine libre, et l'arbre porte-hélice étant couplé mécaniquement à la turbine libre au moyen d'une troisième roue libre.

De cette manière, l'arbre porte-hélice peut être entraîné en rotation sans que la turbine libre le soit également réduisant, de ce fait, la puissance à fournir par la machine électrique tournante pour mettre en rotation l'arbre porte-hélice.

L'invention concerne en outre un aéronef comprenant une turbomachine selon l'invention et au moins un circuit DC connecté à la machine électrique tournante de chaque turbopropulseur au moyen d'un convertisseur AC/DC de ladite turbomachine.

Un tel aéronef bénéfice des avantages liés à la ou aux turbomachines selon l'invention qui l'équipe.

Le circuit DC peut comprendre un premier sous-circuit basse tension et un deuxième sous-circuit haute tension reliés l'un à l'autre par un convertisseur DC/DC et le convertisseur AC/DC du ou de chaque turbopropulseur étant relié au circuit DC par le deuxième sous-circuit.

Le convertisseur DC/DC peut comprendre un transformateur résonnant, le convertisseur DC/DC comprenant préférentiellement un étage de filtration passe-bas à l'interface avec le premier sous-circuit.

On notera que, ci-dessus et dans le reste de ce document, les mentions de « basse tension » et de « haute tension » sont relative l'une à l'autre, le premier sous-circuit présentant une tension de fonctionnement, dite basse tension, inférieure à celle du deuxième sous circuit qui est dite haute tension.

Un tel transformateur résonnant permet la fourniture d'une transformation DC/DC efficace ceci tout en offrant une bonne isolation galvanique.

Le deuxième sous-circuit peut comprendre au moins une batterie du type HVDC, le deuxième sous-circuit comprenant en outre préférentiellement un convertisseur DC/DC afin d'adapter la tension délivrée par la batterie du type HVDC à celle du deuxième sous-circuit.

### Brève description des dessins

La présente invention sera mieux comprise à la lecture de la description d'exemples de réalisation, donnés à titre purement indicatif et nullement limitatif, en faisant référence aux dessins annexés sur lesquels :
La figure 1 illustre une turbomachine, ici un turbopropulseur, selon l'invention.
La figure 2 illustre le schéma cinématique des différents éléments du turbopropulseur selon l'invention.
La figure 3 illustre schématiquement le circuit électrique d'alimentation d'un aéronef équipé d'une pluralité de turbopropulseurs selon l'invention.
La figure 4 illustre un schéma fonctionnel d'un convertisseur DC/DC tel qu'utilisable dans le cadre d'un circuit d'alimentation pour aéronef illustré sur la figure 3.
La figure 5 illustre un exemple de circuit d'un convertisseur tel qu'illustré sur la figure 4.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### Description des modes de réalisation

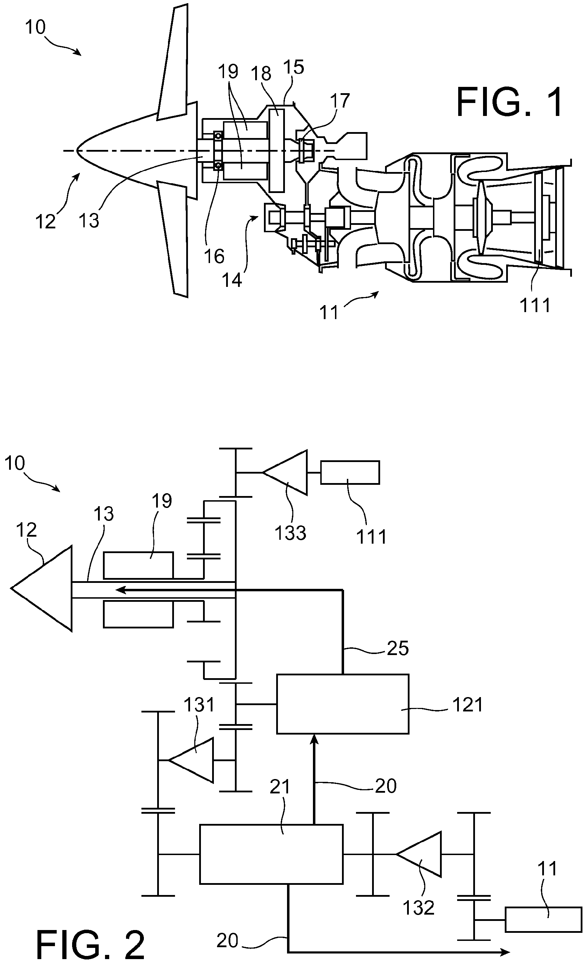

La figure 1 illustre une turbomachine, ici un turbopropulseur 10, selon l'invention comprenant une machine électrique tournante 19 apte à fournir une fonction de génératrice et une fonction de propulsion ceci notamment dans le cadre de déplacement de type taxiage.

La turbomachine 1 selon ce présent mode de réalisation est un turbopropulseur à turbine libre. Ainsi une turbine à gaz 11 comprend, de ce fait, une turbine haute pression, non référencée, entraînant en rotation un arbre de turbine 14 et un compresseur, non référencé, et une turbine libre 111 qui entraîne un arbre secondaire, non référencé, de la turbine à gaz, concentrique à l'arbre de turbine 14.

Le turbopropulseur 10 comprend ainsi comme représenté sur la figure 1, la turbine à gaz 11, une hélice 12, un arbre porte-hélice 13, s'étendant vers la turbine à gaz 11 et étant couplé, comme cela sera décrit plus après, à la turbine libre 111 au moyen d'une transmission. La turbine libre 111 est montée en rotation autour d'un arbre de turbine 14 de la turbine haute pression. L'arbre porte-hélice 13 est entouré par un carter 15 de protection. Il est soutenu dans le carter 15 par des roulements 16 et 17. L'un des roulements 16 est proche de l'hélice 12, et l'autre des roulements 17 est adjacent à une roue dentée 18 d'entraînement de l'arbre porte-hélice 13, qui engrène avec la transmission mentionnée ci-dessus. La machine électrique tournante 19 est, dans cet exemple de l'invention, disposée concentrique autour de l'arbre porte-hélice 13, entre le premier roulement 16 et la roue dentée 18, en étant entourée par le carter 15.

Ainsi, dans le présent mode de réalisation, la turbomachine est un turbopropulseur « classique ». En variante, la turbomachine peut être une turbomachine à rotor basculant, plus connu sous la dénomination anglaise de « proprotor », qui est destiné à équiper un aéronef à décollage verticale connu sous la dénomination anglaise de « tiltrotor ». La turbomachine peut ainsi être aussi bien un turbopropulseur qu'un turbomoteur. L'homme du métier est bien entendu à même de généraliser le présent enseignement décrit pour un turbopropulseur « classique » à ces autres types de turbomachines.

On notera que, dans le présent mode de réalisation, la turbine à gaz 11 étant du type à turbine libre, elle offre deux moyens d'entraînement des éléments du turbopropulseur, la turbine haute pression et son arbre de turbine 14, et la turbine libre 111 et son arbre secondaire. Pour plus de précision concernant la cinématique d'entraînement fournie par la turbomachine dans le cadre du présent mode de réalisation de l'invention, il est renvoyé à la description de la figure 2.

On notera, bien entendu, que si la présente configuration du turbopropulseur 10 décrite ci-dessus est conforme à l'enseignement du document FR 3057029, elle ne se limite pas à cette seule configuration de la machine électrique tournante 19 dans laquelle la machine électrique tournante est agencée concentrique à l'arbre porte-hélice 13. Ainsi, par exemple, le présent enseignement peut aisément être adapté à une configuration déportée telle qu'enseignée par le document US 2017/321601.

On notera également que, si la machine électrique tournante 19 est, dans le cadre de ce mode de réalisation, une simple machine électrique tournante apte à fournir une fonction génératrice et une fonction de propulsion électrique, la machine électrique tournante 19 peut présenter des fonctions supplémentaires, telles que celles d'alimenter un circuit de dégivrage des pales selon la possibilité enseignée par le document US 2019/233128. En effet, compte tenu des similarités entre le turbopropulseur enseigné par le document FR 3057029 et celui enseigné par le document US 2019/233128, l'homme du métier est parfaitement à même d'appliquer l'enseignement du document US 2019/233128 au turbopropulseur selon le présent mode de réalisation. A cet effet, les parties du document US 2019/233128 liées à la figure 2 correspondant aux paragraphes [14] à [20] et la figure 2 sont incorporées par référence au présent document.

Selon le principe de l'invention, la machine électrique tournante 19 présente au moins une première configuration dans laquelle elle est couplée mécaniquement à l'arbre porte hélice, et le turbopropulseur 10 comprend une pompe à huile moteur 21 qui, comme montré sur la figure 2, alimente un circuit de lubrification 20 du turbopropulseur 10. Ainsi, la machine électrique tournante 19 est apte à entraîner en rotation l'arbre porte-hélice 13 lorsqu'elle est alimentée en courant dans l'au moins une première configuration. Dans cette même première configuration, la machine électrique tournante 19 est couplée mécaniquement à la pompe à huile moteur 21 de telle manière que la machine électrique tournante 19 entraîne en outre la pompe à huile moteur 21 lorsqu'elle alimentée en courant. Ainsi, lorsque la machine électrique tournante 19 est alimentée en courant, l'entraînement de la pompe à huile moteur permet une circulation d'huile dans le circuit de lubrification autorisant, outre la lubrification des éléments du turbopropulseur, tels que les paliers et les roulements 16 et 17 du turbopropulseur 10, de fournir une pression hydraulique à l'ensemble des équipements de la turbomachine le nécessitant, tels que par exemple une unité de commande d'hélice 121, comme cela est décrit ci-après en lien avec la figure 2.

On notera que dans le cadre de l'invention, la machine électrique tournante 19 est préférentiellement une machine électrique tournante sans balais, ceci pour limiter les risques d'usure et la maintenance du turbopropulseur 10, et peut ainsi être aussi bien une machine électrique tournante synchrone à aimant permanent qu'une machine électrique tournante synchrone à reluctance variable, une machine synchrone à rotor bobiné ou encore une machine électrique tournante asynchrone.

Il est entendu, ci-dessus et dans le reste de ce document, par « entraînement de la pompe à huile moteur 21 » par la machine électrique tournante 19, ou tout autre élément du turbopropulseur 10, que la pompe à huile moteur 21, qui est généralement une pompe rotative, est mis en mouvement par la machine électrique tournante 19, ou le tout autre élément de turbopropulseur 10, ceci, par exemple dans le cas d'une pompe rotative, par un entraînement en rotation d'un arbre de ladite pompe à huile moteur 21.

Afin d'illustrer un tel couplage mécanique dans la première configuration de la machine électrique rotative 19 avec à la fois l'arbre porte-hélice 13 et la pompe à huile moteur 21, il a été présenté sur la figure 2 un exemple de schéma cinématique de ces couplages mécaniques.

Bien entendu, si ce schéma cinématique montre ces couplages mécaniques dans la première configuration, dans une application usuelle de l'invention, ce couplage peut être intermittent, la machine électrique rotative 19 présentant une deuxième configuration dans laquelle elle est découplée à la fois à l'arbre porte-hélice 13 et de la pompe à huile moteur 21. Une telle possibilité de couplage/découplage entre la machine électrique tournante 19 avec l'arbre porte-hélice et la pompe à huile moteur 21 peut être réalisée en conformité avec l'enseignement du document US 2017/321601. Ainsi l'enseignement du document US 2017/321601 d'accouplement sélectif présent des paragraphes [30] à [40] et la figure 1 associée est incorporé par référence au présent document.

Comme illustré sur la figure 2, dans la première configuration, la machine électrique tournante 19 est directement couplée à l'arbre porte-hélice 13, et donc à l'hélice 12 au moyen d'un ensemble d'engrenages pour réaliser une adaptation de vitesse entre la machine électrique tournante 19 et l'arbre porte-hélice 13. Parmi cet ensemble d'engrenages, l'engrenage d'entrée de l'arbre porte-hélice 13 est également couplé à la turbine libre 111 de la turbine à gaz 11, au travers d'une troisième roue libre 133, et à l'unité de commande d'hélice 121. On notera que, pour des raisons de simplification du schéma cinématique, la turbine libre 111 est artificiellement séparée de la turbine à gaz, puisque la turbine libre 111 est découplée en rotation de l'arbre de turbine 14. L'unité de commande d'hélice 121, et donc l'arbre porte-hélice 13 et la machine électrique tournante 19, sont également couplés mécaniquement à la pompe à huile moteur 21 ceci au travers d'une première roue libre 131. La pompe à huile moteur 21 est également couplée mécaniquement à la turbine à gaz 11, ou plus précisément à la turbine haute pression et à l'arbre de turbine 14, au moyen d'une deuxième roue libre 132.

Avec de telles roues libres 131, 132, 133, il n'est pas nécessaire d'utiliser des systèmes d'accouplement sélectif lors du passage d'un type de propulsion parmi la propulsion fournie par la turbine à gaz 11, c'est-à-dire par la turbine haute pression et la turbine libre 111, et la propulsion fournie par la machine électrique tournante 19, à l'autre type. Le mécanisme d'entraînement s'en trouve donc simplifié et présente donc, de ce fait, une maintenance simplifiée.

On peut en effet voir, que lorsque la machine électrique tournante 19 est alimentée en courant, celle-ci va pouvoir entraîner en rotation l'arbre porte-hélice 13 au travers de son engrenage d'entrée. Ce même engrenage d'entrée entraîne l'unité de commande d'hélice 121, et notamment une pompe à huile supplémentaire, non référencée, comprise par l'unité de commande d'hélice 121, ladite pompe à huile supplémentaire étant apte à élever la pression d'huile fournie par la pompe à huile moteur 21 au travers du réseau d'huile 20 pour permettre la commande hydraulique du pas de l'hélice lorsque cette dernière est à pas variable au travers d'un sous réseau d'huile 25. L'entraînement de l'unité de commande d'hélice 121 permet également d'entraîner la pompe à huile moteur 21, au travers de la première roue libre 131, pour alimenter le circuit de lubrification 20 en huile. On notera que, lors d'une telle propulsion électrique, les deuxième et troisième roues libres 132, 133 permettent un découplage respectif entre la pompe à huile moteur 21 et l'arbre de turbine 14 et entre l'arbre porte hélice 13 et la turbine libre. De cette manière, les éléments de la turbine à gaz n'étant pas entraînés, les efforts à fournir par la machine électrique tournante 19 sont réduits.

Lorsque la propulsion est fournie par la turbine à gaz 11, l'arbre de turbine 14 permet, selon un fonctionnement usuel d'un turbopropulseur, d'entraîner la pompe à huile moteur 21 au travers de la deuxième roue libre 132. La turbine libre 111 entraîne, quant à elle l'arbre porte-hélice 13 ceci au moyen de la troisième roue libre 133. Cet entraînement de l'arbre porte-hélice 13 permet également l'entraînement de l'unité de commande d'hélice. Dans le cas où la machine électrique tournante 19 reste couplée à l'arbre porte hélice 13, l'éventuel découplage sélectif n'étant pas mis en oeuvre, celle-ci est également entraînée en rotation par l'arbre porte-hélice 13 et peut donc fournir une fonction génératrice d'électricité. Dans cette configuration, la première roue libre 131 permet d'assurer le découplage entre l'arbre porte-hélice 13 et la pompe à huile moteur 21 afin d'assurer que l'entraînement de cette dernière ne soit assuré que par l'arbre de turbine 14 lorsque la propulsion est fournie par la turbine à gaz 11.

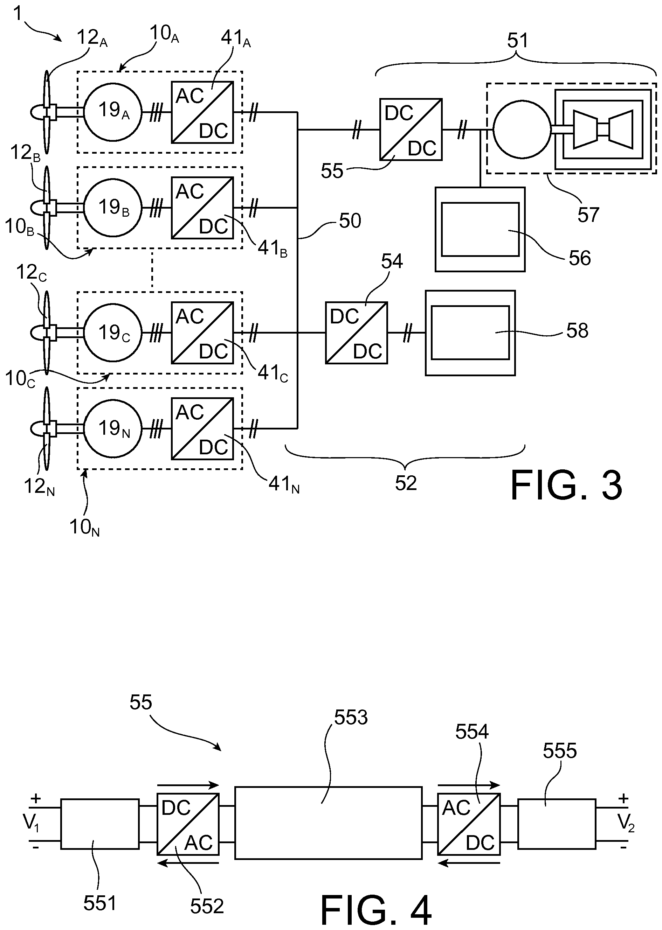

Pour permettre un tel passage d'une fonction propulsion électrique à une fonction génératrice, comme montré sur la figure 3 qui schématise le circuit électrique d'un aéronef 1 comprenant une pluralité de turbopropulseur 10_{A}, 10_{B}, 10_{C}, 10_{N}, la machine électrique tournante 19_{A}, 19_{B}, 19_{C}, 19_{N} de chaque turbopropulseur 10_{A}, 10_{B}, 10_{C}, 10_{N} est reliée à un circuit DC 50 de l'aéronef au moyen d'un convertisseur AC/DC 41_{A}, 41_{B}, 41_{C}, 41_{N} dudit turbopropulseur 10_{A}, 10_{B}, 10_{C}, 10_{N}. Le convertisseur AC/DC 41_{A}, 41_{B}, 41_{C}, 41_{N} peut être du type onduleur afin de permettre une conversion du courant électrique DC fourni par le circuit DC 50 au turbopropulseur en courant AC, lorsque la fonction propulsion électrique est mise en oeuvre. De la même façon, le convertisseur AC/DC 41_{A}, 41_{B}, 41_{C}, 41_{N} peut également présenter une configuration redresseur afin de permettre une conversion du courant électrique AC fourni par la machine électrique tournante 19 en courant DC pour alimenter le circuit DC, lorsque la fonction génératrice de la machine électrique tournante 19 est mise en oeuvre.

Selon une convention usuel, il est entendu ici et dans le reste de ce document, par « AC » et « DC », courant continu et courant alternatif. De même, il est également entendu par « courant DC » et « courant AC », courant continu et courant alternatif.

Selon une possibilité avantageuse de l'invention présente sur la figure 3, afin de permettre une alimentation électrique parfaitement adaptée de la machine électrique tournante 19_{A}, 19_{B}, 19_{C}, 19_{N}, le circuit DC 50 peut comprendre un premier sous-circuit 51 basse tension et un deuxième sous-circuit 52 haute tension reliés l'un à l'autre par un premier convertisseur DC/DC 55. Selon cette possibilité le convertisseur AC/DC 41_{A}, 41_{B}, 41_{C}, 41_{N} de chaque turbopropulseur 10, 10_{A}, 10_{B}, 10_{C}, 10_{N} est relié au circuit DC 50 par le deuxième sous-circuit 52. De cette manière, il est possible d'alimenter les différents équipements de l'aéronef par l'intermédiaire d'une basse tension selon une configuration usuelle des aéronefs, celle-ci étant généralement de 28 V, et d'utiliser une tension plus haute dans le cadre de l'alimentation des différentes machines électriques tournantes 19_{A}, 19_{B}, 19_{C}, 19_{N} afin d'optimiser la puissance accessible aux machines électriques tournantes 19_{A}, 19_{B}, 19_{C}, 19_{N} dans le cadre de la fonction de propulsion électrique, cette tension pouvant être, par exemple, égale ou supérieure à 270 V. Selon cette possibilité, le deuxième sous-circuit 52 forme un sous-circuit du type HVDC.

Le premier convertisseur DC/DC 55 est préférentiellement adapté pour fournir une isolation galvanique entre le premier sous-circuit 51 basse tension et le deuxième sous-circuit 52 haute tension. Selon cette possibilité, comme illustré sur la figure 4, le premier convertisseur DC/DC 55 peut comporter, en partant du premier sous-circuit 51 vers le deuxième sous-circuit 52 :
- un premier étage de filtrage 551 du type passe bas, notamment adapté pour filtrer au moins en partie les fréquences supérieures ou égales à 1 KHz,
- un deuxième étage convertisseur DC/AC réversible 552 pouvant à la fois fournir une fonction onduleur, pour un transfert d'énergie du premier sous-circuit 51 vers le deuxième sous-circuit 52, et une fonction redresseur, pour un transfert d'énergie du deuxième sous-circuit 52 vers le premier sous-circuit 51, le deuxième étage étant apte à fournir une tension alternative de fréquence élevée, par exemple supérieure ou égale à 1 KHz,
- un transformateur 553 configuré pour élever la tension AC fournie par le deuxième étage, le transformateur étant préférentiellement un transformateur résonnant, c'est-à-dire que la fréquence de résonance du circuit côté primaire du transformateur 553 est préférentiellement égale à la fréquence de résonnance du circuit côté secondaire du transformateur 553, le deuxième étage convertisseur DC/AC 552 étant alors préférentiellement configuré pour fournir une tension alternative à une fréquence sensiblement égale à la fréquence de résonnance des circuits côté primaire et secondaire du transformateur 553,
- un troisième étage convertisseur AC/DC réversible 554 pouvant à la fois fournir une fonction redresseur, pour un transfert d'énergie du premier sous-circuit 51 vers le deuxième sous-circuit 52, et une fonction onduleur, pour un transfert d'énergie du deuxième sous-circuit 52 vers le premier sous-circuit 51, le troisième étage étant apte à fournir une tension alternative de fréquence élevée, par exemple supérieure ou égale à 1 KHz, la fréquence fournie par le troisième étage convertisseur AC/DC réversible 554 étant, dans le cas où le transformateur 553 est un transformateur résonnant, le troisième étage convertisseur AC/DC réversible 554 étant alors préférentiellement configuré pour fournir une tension alternative à une fréquence sensiblement égale à la fréquence de résonnance des circuits côté primaire et secondaire du transformateur 553,
- un quatrième étage de filtrage 555 du type passe bas, notamment adapté pour filtrer au moins en partie les fréquences supérieures ou égales à 1 KHz.

On notera que les premier et quatrième étage de filtrage 551, 555 ne sont pas forcément nécessaire et que, dans une configuration simplifiée d'un tel premier convertisseur DC/DC 55, il envisageable de ne pas en prévoir ou, d'une manière avantageuse, de seulement prévoir le premier étage de filtrage 551 de manière à protéger le premier sous-circuit 51.

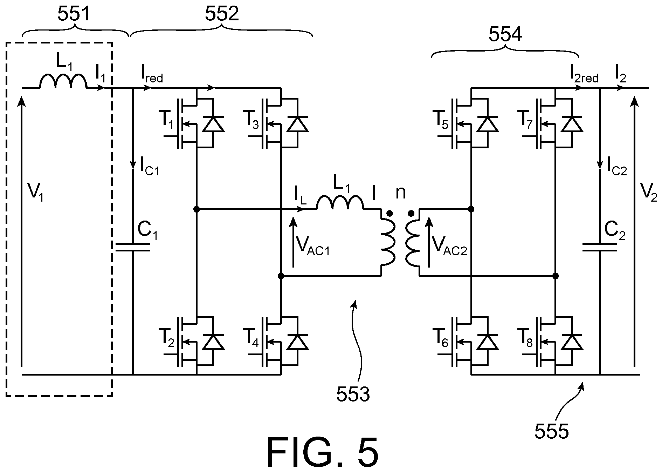

La figure 5 illustre un exemple d'un tel convertisseur DC/DC 55 dans une configuration résonnante. Selon cet exemple, le premier étage de filtrage 551 comprend une première bobine L₁ (courant I₁) et un condensateur C₁ (courant I_{C1}). Le deuxième étage convertisseur DC/AC 552 comprend quatre transistors T1, T2, T3, T4 configurés pour connecter une première et une deuxième sortie du premier étage de filtrage 551 en alternance à respectivement une première et une deuxième entrée du transformateur 553 selon une commutation double alternance également connue sous la dénomination anglaise de « full bridge ». Ainsi, le deuxième étage convertisseur DC/AC 551 fourni/reçoit le courant I_{red} avec la tension alternative V_{AC1}. Le transformateur 553 comprend, outre les bobine primaire et secondaire du transformateur, une deuxième bobine L₁ ceci de manière à égaliser les fréquences de résonnance du circuit primaire et du circuit secondaire. Ainsi, le transformateur présente/reçoit à l'entrée du troisième étage convertisseur AC/DC réversible 554 une tension alternative V_{AC2}. De la même manière que le deuxième étage convertisseur DC/AC 552, le premier troisième étage convertisseur AC/DC réversible 554 comprend quatre transistors T1, T2, T3, T4 configurés pour connecter une première et une deuxième entrée du quatrième étage de filtrage 555 en alternance à respectivement une première et une deuxième sortie du transformateur 553 selon une commutation double alternance également connue sous la dénomination anglaise de « full bridge ». Le quatrième étage de filtrage 555 reçoit ainsi le courant I_{2red} et comprend un condensateur C₂ (courant I_{C2}) et permet de fournir/récupérer une tension V₂ correspondant à la tension du deuxième sous-circuit 52 du circuit DC 50.

Bien entendu cet exemple de premier convertisseur DC/DC 55 est fourni à titre d'exemple, d'autres topographies de convertisseurs sont parfaitement envisageables sans que l'on sorte du cadre de l'invention, Le convertisseur devant préférentiellement fournir une isolation galvanique par l'intermédiaire notamment d'un transformateur qui peut être avantageusement résonnant.

Selon une configuration usuelle d'un aéronef 1, le premier sous-circuit 51 peut comporter, outre le convertisseur DC/DC 55qui permet sa connexion au deuxième sous-circuit 52, un système de batteries classique 56 permettant l'alimentation des équipements de l'aéronef 1 en l'absence de génération de courant et un système de génération de courant 57.

Afin de permettre une alimentation adaptée à une propulsion électrique, le deuxième sous-circuit 52 peut comporter en outre un système de batteries 58 dit système de batteries HVDC apte à fournir une puissance électrique suffisante pour autoriser un déplacement de l'aéronef 1 au moyen de la fonction propulsion électrique offerte par les machines électriques tournantes 19_{A}, 19_{B}, 19_{C}, 19_{N}. Afin d'adapter la tension de sortie du système de batteries HVDC 58 à la tension du deuxième sous-circuit, le deuxième sous circuit peut comporter un deuxième convertisseur DC/DC. Ce deuxième convertisseur DC/DC peut être un convertisseur buck-boost ou seulement buck ou boost en fonction de la plage de tension attendue en sortie du système de batteries HVDC 58.

Avec une telle configuration, les machines tournantes électriques équipant les turbopropulseurs autorise différentes configurations de l'aéronef dont, par exemple :
- un déplacement au sol du type taxiage en propulsion électrique,
- un déplacement en vol, notamment en vol de croisière, avec une propulsion électrique,
- une génération d'électricité, notamment pour recharger le système de batterie HVDC 58, dans le cadre d'une propulsion classique fournie par la turbine à gaz 11,
- l'utilisation, en vol, d'un ou plusieurs des turbopropulseurs 10_{A}, 10_{B}, 10_{C}, 10_{N} en tant qu'éolienne de secours.

## Revendications

1. Turbomachine(10, 10_{A}, 10_{B}, 10_{C}, 10_{N}) comprenant une hélice (12), un arbre porte-hélice (13) portant l'hélice (12), une machine électrique tournante (19, 19_{A}, 19_{B}, 19_{C}, 19_{N}), présentant au moins une première configuration dans laquelle elle est couplée mécaniquement à l'arbre porte hélice (13), et une pompe à huile moteur (21) alimentant un circuit de lubrification (20) de la turbomachine (10, 10_{A}, 10_{B}, 10_{C}, 10_{N}), la machine électrique tournante (19, 19_{A}, 19_{B}, 19_{C}, 19_{N}) étant apte à entraîner en rotation l'arbre porte hélice (13) lorsqu'elle est alimentée en courant dans l'au moins une première configuration,
la turbomachine (10, 10_{A}, 10_{B}, 10_{C}, 10_{N}) étant **caractérisée en ce que** la machine électrique tournante (19, 19_{A}, 19_{B}, 19_{C}, 19_{N}) dans la première configuration est couplée mécaniquement à la pompe à huile moteur (21) de telle manière que la machine électrique tournante (19, 19_{A}, 19_{B}, 19_{C}, 19_{N}) entraîne en outre la pompe à huile moteur (21) lorsqu'elle est alimentée en courant.

2. Turbomachine (10, 10_{A}, 10_{B}, 10_{C}, 10_{N}) selon la revendication 1, dans laquelle la machine électrique tournante (19, 19_{A}, 19_{B}, 19_{C}, 19_{N}) est couplée mécaniquement à la pompe à huile moteur au moyen d'au moins une première roue libre (131).

3. Turbomachine (10, 10_{A}, 10_{B}, 10_{C}, 10_{N}) selon la revendication 1 ou 2, dans laquelle la turbomachine comprend en outre une turbine à gaz (11) comprenant une turbine haute pression, et dans laquelle la pompe à huile moteur (21) est couplée mécaniquement à la turbine haute pression au moyen d'une deuxième roue libre de manière à permettre un entraînement de la pompe à huile moteur (21) aussi bien par la machine électrique tournante (19, 19_{A}, 19_{B}, 19_{C}, 19_{N}) dans au moins sa première configuration que par la turbine à gaz (11).

4. Turbomachine (10, 10_{A}, 10_{B}, 10_{C}, 10_{N}) selon l'une quelconque des revendications 1 à 3, dans laquelle l'hélice (12, 12_{A}, 12_{B}, 12_{C}, 12_{N}) est une hélice à pas variable et est reliée au circuit lubrification (20) par une unité de commande d'hélice (121) de telle manière à permettre un réglage du pas d'hélice (12) à partir d'une pression d'huile qui lui est appliquée par l'unité de commande d'hélice (121).

5. Turbomachine (10, 10_{A}, 10_{B}, 10_{C}, 10_{N}) selon la revendication 4, dans laquelle l'unité de commande d'hélice (121) comprend une pompe à huile supplémentaire pour élever la pression d'huile fournie par la pompe à huile moteur (21) et dans laquelle la pompe à huile supplémentaire (121) est couplée mécaniquement à l'arbre porte-hélice (13) de telle manière que la rotation de l'arbre porte-hélice (13) entraîne la pompe à huile supplémentaire.

6. Turbomachine (10, 10_{A}, 10_{B}, 10_{C}, 10_{N}) selon l'une quelconque des revendications 1 à 5, dans laquelle la turbomachine est une turbomachine à turbine libre, la turbomachine comprenant en outre ainsi une turbine à gaz (11) comprenant une turbine libre,
et dans laquelle l'arbre porte-hélice (13) est couplé mécaniquement à la turbine libre au moyen d'une troisième roue libre (133).

7. Aéronef (1) comprenant au moins une turbomachine (10, 10_{A}, 10_{B}, 10_{C}, 10_{N}) selon l'une quelconque des revendications 1 à 6 et au moins un circuit DC (50) connecté à la machine électrique tournante (19, 19_{A}, 19_{B}, 19_{C}, 19_{N}) de la ou de chaque turbomachine (10, 10_{A}, 10_{B}, 10_{C}, 10_{N}) au moyen d'un convertisseur AC/DC (41_{A}, 41_{B}, 41_{C}, 41_{N}) de ladite turbomachine (10, 10_{A}, 10_{B}, 10_{C}, 10_{N}).

8. Aéronef (1) selon la revendication 7, dans laquelle le circuit DC (50) comprend un premier sous-circuit (51) basse tension et un deuxième sous-circuit (52) haute tension reliés l'un à l'autre par un convertisseur DC/DC (55) et dans laquelle le convertisseur AC/DC (41_{A}, 41_{B}, 41_{C}, 41_{N}) du ou de chaque turbomachine (10, 10_{A}, 10_{B}, 10_{C}, 10_{N}) est relié au circuit DC (50) par le deuxième sous-circuit (52).

9. Aéronef (1) selon la revendication 8, dans laquelle le convertisseur DC/DC (55) comprend un transformateur résonnant (553), le convertisseur DC/DC (55) comprenant préférentiellement un étage de filtration passe-bas (555) à l'interface avec le premier sous-circuit (51).

10. Aéronef (1) selon la revendication 8 ou 9, dans laquelle le deuxième sous-circuit comprend au moins une batterie du type HVDC, le deuxième sous-circuit comprenant en outre préférentiellement un convertisseur DC/DC afin d'adapter la tension délivrée par la batterie du type HVDC à celle du deuxième sous-circuit.

## Patentansprüche

1. Turbomaschine (10, 10_{A}, 10_{B}, 10c, 10_{N}), umfassend einen Propeller (12), eine Propellerwelle (13), die den Propeller (12) trägt, eine elektrische Drehmaschine (19, 19_{A}, 19_{B}, 19c, 19_{N}), die mindestens eine erste Konfiguration aufweist, in der sie mechanisch mit der Propellerwelle (13) gekoppelt ist, und eine Motorölpumpe (21), die einen Schmiermittelkreis (20) der Turbomaschine (10, 10_{A}, 10_{B}, 10c, 10_{N}) versorgt, wobei die elektrische Drehmaschine (19, 19_{A}, 19_{B}, 19_{C}, 19_{N}) dazu ausgelegt ist, die Propellerwelle (13) drehanzutreiben, wenn sie in der mindestens einen ersten Konfiguration mit Strom versorgt wird,
wobei die Turbomaschine (10, 10_{A}, 10_{B}, 10c, 10_{N}) **dadurch gekennzeichnet ist, dass** die elektrische Drehmaschine (19, 19_{A}, 19_{B}, 19_{C}, 19_{N}) in der ersten Konfiguration mechanisch derart mit der Motorölpumpe (21) gekoppelt ist, dass die elektrische Drehmaschine (19, 19_{A}, 19_{B}, 19_{C}, 19_{N}) ferner die Motorölpumpe (21) antreibt, wenn sie mit Strom versorgt wird.

2. Turbomaschine (10, 10_{A}, 10_{B}, 10c, 10_{N}) nach Anspruch 1, wobei die elektrische Drehmaschine (19, 19_{A}, 19_{B}, 19_{C}, 19_{N}) mittels mindestens eines ersten Freilaufs (131) mechanisch mit der Motorölpumpe gekoppelt ist.

3. Turbomaschine (10, 10_{A}, 10_{B}, 10c, 10_{N}) nach Anspruch 1 oder 2, wobei die Turbomaschine ferner eine Gasturbine (11) umfasst, die eine Hochdruckturbine umfasst, und wobei die Motorölpumpe (21) mittels eines zweiten Freilaufs mechanisch mit der Hochdruckturbine gekoppelt ist, um einen Antrieb der Motorölpumpe (21) sowohl durch die elektrische Drehmaschine (19, 19_{A}, 19_{B}, 19_{C}, 19_{N}) in mindestens ihrer ersten Konfiguration als auch durch die Gasturbine (11) zu ermöglichen.

4. Turbomaschine (10, 10_{A}, 10_{B}, 10c, 10_{N}) nach einem der Ansprüche 1 bis 3, wobei der Propeller (12, 12_{A}, 12_{B}, 12c, 12_{N}) ein Verstellpropeller ist und durch eine Propellersteuereinheit (121) mit dem Schmiermittelkreis (20) verbunden ist, um eine Einstellung der Steigung des Propellers (12) anhand eines Öldrucks zu ermöglichen, der durch die Propellersteuereinheit (121) auf ihn ausgeübt wird.

5. Turbomaschine (10, 10_{A}, 10_{B}, 10c, 10_{N}) nach Anspruch 4, wobei die Propellersteuereinheit (121) eine zusätzliche Ölpumpe umfasst, um den durch die Motorölpumpe (21) bereitgestellten Öldruck anzuheben, und wobei die zusätzliche Ölpumpe (121) derart mechanisch mit der Propellerwelle (13) gekoppelt ist, dass die Drehung der Propellerwelle (13) die zusätzliche Ölpumpe antreibt.

6. Turbomaschine (10, 10_{A}, 10_{B}, 10c, 10_{N}) nach einem der Ansprüche 1 bis 5, wobei die Turbomaschine eine Turbomaschine mit freier Turbine ist, wobei die Turbomaschine ferner ebenso eine Gasturbine (11) umfasst, die eine freie Turbine umfasst,
und wobei die Propellerwelle (13) mittels eines dritten Freilaufs (133) mechanisch mit der freien Turbine gekoppelt ist.

7. Flugzeug (1), das mindestens eine Turbomaschine (10, 10_{A}, 10_{B}, 10c, 10_{N}) nach einem der Ansprüche 1 bis 6 und mindestens einen Gleichstromkreis (50) umfasst, der mittels eines AC/DC-Wandlers (41_{A}, 41_{B}, 41_{C}, 41_{N}) der Turbomaschine (10, 10_{A}, 10_{B}, 10_{C}, 10_{N}) mit der elektrischen Drehmaschine (19, 19_{A}, 19_{B}, 19_{C}, 19_{N}) der oder jeder Turbomaschine (10, 10_{A}, 10_{B}, 10_{C}, 10_{N}) verbunden ist.

8. Flugzeug (1) nach Anspruch 7, wobei der Gleichstromkreis (50) einen ersten Niederspannungs-Teilkreis (51) und einen zweiten Hochspannungs-Teilkreis (52) umfasst, die über einen DC/DC-Wandler (55) miteinander verbunden sind, und wobei der AC/DC-Wandler (41_{A}, 41_{B}, 41_{C}, 41_{N}) der oder jeder Turbomaschine (10, 10_{A}, 10_{B}, 10_{C}, 10_{N}) durch den zweiten Teilkreis (52) mit dem Gleichstromkreis (50) verbunden ist.

9. Flugzeug (1) nach Anspruch 8, wobei der DC/DC-Wandler (55) einen Resonanztransformator (553) umfasst, wobei der DC/DC-Wandler (55) vorzugsweise eine Tiefpassfilterstufe (555) an der Schnittstelle mit dem ersten Teilkreis (51) umfasst.

10. Flugzeug (1) nach Anspruch 8 oder 9, wobei der zweite Teilkreis mindestens eine Batterie vom Typ HVDC umfasst, wobei der zweite Teilkreis vorzugsweise ferner einen DC/DC-Wandler umfasst, um die von der Batterie vom Typ HVDC gelieferte Spannung an die des zweiten Teilkreises anzupassen.

## Claims

1. Turbomachine (10, 10_{A}, 10_{B}, 10_{C}, 10_{N}) comprising a propeller (12), a propeller shaft (13) supporting the propeller (12), a rotating electric machine (19, 19_{A}, 19_{B}, 19_{C}, 19_{N}), having at least a first configuration in which it is mechanically coupled to the propeller shaft (13), and an engine oil pump (21) supplying a lubricating circuit (20) of the turbomachine (10, 10_{A}, 10_{B}, 10c, 10_{N}), the rotating electric machine (19, 19_{A}, 19_{B}, 19c, 19_{N}), being capable of driving the propeller shaft (13) in rotation when it is supplied with current in the at least one first configuration,
the turbomachine (10, 10_{A}, 10_{B}, 10c, 10_{N}) being **characterised in that** the rotating electric machine (19, 19_{A}, 19_{B}, 19_{C}, 19_{N}) in the first configuration is coupled mechanically to the engine oil pump (21) such that the rotating electric machine (19, 19_{A}, 19_{B}, 19_{C}, 19_{N}) also drives the engine oil pump (21) when it is supplied with current.

2. Turbomachine (10, 10_{A}, 10_{B}, 10_{C}, 10_{N}) according to claim 1, wherein the rotating electric machine (19, 19_{A}, 19_{B}, 19_{C}, 19_{N}) is coupled mechanically to the engine oil pump by means of at least one first free wheel (131).

3. Turbomachine (10, 10_{A}, 10_{B}, 10c, 10_{N}) according to claim 1 or 2, wherein the turbomachine further comprises a gas turbine (11) comprising a high-pressure turbine, and wherein the engine oil pump (21) is mechanically coupled to the high-pressure turbine by means of a second free wheel so as to enable the engine oil pump (21) to be driven both by the rotating electric machine (19, 19_{A}, 19_{B}, 19_{C}, 19_{N}) in at least its first configuration and by the gas turbine (11).

4. Turbomachine (10, 10_{A}, 10_{B}, 10_{C}, 10_{N}) according to any of claims 1 to 3, wherein the propeller (12, 12_{A}, 12_{B}, 12c, 12_{N}) is a variable pitch propeller and is connected to the lubrication circuit (20) by a propeller control unit (121) so as to allow adjustment of the propeller pitch (12) from an oil pressure applied to it by the propeller control unit (121).

5. Turbomachine (10, 10_{A}, 10_{B}, 10_{C}, 10_{N}) according to claim 4, wherein the propeller control unit (121) comprises an additional oil pump for raising the oil pressure provided by the engine oil pump (21) and wherein the additional oil pump (121) is coupled mechanically to the propeller shaft (13) in such a way that the rotation of the propeller shaft (13) drives the additional oil pump.

6. Turbomachine (10, 10_{A}, 10_{B}, 10_{C}, 10_{N}) according to any of claims 1 to 5, wherein the turbomachine is a free turbine turbomachine, the turbomachine thereby further comprising a gas turbine (11) comprising a free turbine,
and wherein the propeller shaft (13) is coupled mechanically to the free turbine by means of a third free wheel (133).

7. Aircraft (1) comprising at least one turbomachine (10, 10_{A}, 10_{B}, 10c, 10_{N}) according to any of claims 1 to 6 and at least one DC circuit (50) connected to the rotating electric machine (19, 19_{A}, 19_{B}, 19_{C}, 19_{N}) of the or of each turbomachine (10, 10_{A}, 10_{B}, 10_{C}, 10_{N}) by means of an AC/DC converter (41_{A}, 41_{B}, 41_{C}, 41_{N}) of said turbomachine (10, 10_{A}, 10_{B}, 10_{C}, 10_{N}).

8. Aircraft (1) according to claim 7, wherein the circuit DC (50) comprises a first low-voltage subcircuit (51) and a second high-voltage subcircuit (52) connected to one another by a DC/DC converter (55) and wherein the AC/DC converter (41_{A}, 41_{B}, 41_{C}, 41_{N}) of the or of each turbomachine (10, 10_{A}, 10_{B}, 10c, 10_{N}) is connected to the DC circuit (50) by the second subcircuit (52).

9. Aircraft (1) according to claim 8, wherein the DC/DC converter (55) comprises a resonant transformer (553), the DC/DC converter (55) preferably comprising a low-pass filter stage (555) at the interface with the first subcircuit (51).

10. Aircraft (1) according to claim 8 or 9, wherein the second subcircuit comprises at least one HVDC type battery, the second subcircuit preferably further comprising a DC/DC converter in order to adjust the voltage delivered by the HVDC type battery to that of the second subcircuit.
